(19) Europäisches Patentamt
European Patent Office
Office européen des brevets

(11) Publication number : **0 570 207 A1**

(12) **EUROPEAN PATENT APPLICATION**

(21) Application number : **93303671.7**

(51) Int. Cl.[5] : **C08K 5/12,** C08L 83/04

(22) Date of filing : **12.05.93**

(30) Priority : **12.05.92 US 881573**

(43) Date of publication of application :
**18.11.93 Bulletin 93/46**

(84) Designated Contracting States :
**DE FR GB**

(71) Applicant : **GENERAL ELECTRIC COMPANY**
**1 River Road**
**Schenectady, NY 12345 (US)**

(72) Inventor : **Evans, Edwin Robert**
**9 Rodrisco Court**
**Clifton Park, New York 12065 (US)**
Inventor : **Rosko, Michael John**
**RD No.2, Box 31**
**Schaghticoke, New York 12154 (US)**

(74) Representative : **Pratt, Richard Wilson et al**
**London Patent Operation G.E. Technical Services Co. Inc. Essex House 12/13 Essex Street**
**London WC2R 3AA (GB)**

(54) **Flame retardant system for polyorganosiloxane compositions.**

(57) A synergistic flame retardant system having a halogenated aromatic di-ester and platinum is added to a heat curable rubber composition to improve extinguishing times and minimal char formation. When used in conjunction with platinum, brominated aromatic diols and brominated aromatic esters particularly increase the flame retardancy when added to a polyorganosiloxane heat curable rubber composition. The halogenated aromatic di-ester has four halogen atoms substituted on the aromatic ring, a $COOR^1$ group and a $COOR^2$ group, wherein each halogen may be the same as or different than the others, $R_1$ is selected from a hydrocarbon having 1-20 carbon atoms, an ether, and an alkenyl group having 2-20 carbon atoms, and $R_2$ is selected from a hydrocarbon having 1-20 carbon atoms, an ether, and an alkenyl group having 2-20 carbon atoms. If either $R_1$ or $R_2$ is an ether, it preferably has a formula $-R_3-O-R_4-$ wherein $R_3$ is a hydrocarbon chain having 1-20 carbon atoms, and $R_4$ is a hydrocarbon chain having 1-20 carbon atoms.

EP 0 570 207 A1

## FIELD OF THE INVENTION

The present invention relates to a flame retardant system for polyorganosiloxane compositions which is based on the synergistic effect of platinum and an aromatic halogenated ester. More particularly, the present invention relates to a flame retardant synergistic system comprising platinum and a brominated aromatic ester useful in improving the flame retardancy of polydiorganosiloxanes.

## BACKGROUND OF THE INVENTION

Flame retardant silicone heat-cured rubber compositions are taught in U.S. Patent No. 3,514,424 to Noble et al. Silicone heat-cured rubber compositions containing a platinum additive over the range of 1-60 ppm require a higher amount of oxygen to initiate burning. The amount of oxygen needed is known as the Limiting Oxygen Index. The range of 1-60 ppm is also sufficient to have an effect on char formation. Apparently, the role of the platinum is catalytic and results in the development of a more tightly cured matrix, decreasing the amount of cyclics available for combustion.

The platinum may be added in the form of a masterbatch comprising, for example, silicone gum, process aid, treated fumed silica, triphenyl phosphite and platinum. One particular masterbatch contains about 75 parts by weight methyl vinyl polysiloxane, about 1.5 parts by weight silanol stopped silicone oil, about 22.5 parts by weight treated silicon dioxide, about 0.5 parts by weight triphenyl phosphite, and about 1.0 part by weight of a 3.7% solution of chloroplatinic acid in vinyl tetramer.

Another platinum catalyst masterbatch comprises 100 parts by weight of a gum component, 1 part of a 3.7% solution of chloroplatinic acid in vinyl tetramer, and 1 to 2 parts treated fumed silica. In this exemplary masterbatch, the gum component comprises 100 parts of a vinyl chain-stopped silicone gum having a penetration of about 900, 2 parts of process aid, and about 30 parts silica filler.

Wire and cable compounds containing platinum, either in the form of a dilute solution of chloroplatinic acid in vinyl tetramer or in the form of the platinum containing siloxane masterbatch, are usually cured with 2,4-dichlorobenzoyl peroxide which is available, e.g., as Luperco CST, from Lucidol Division, Penwalt Corporation, Buffalo, New York. Luperco CST exhibits 2.1% active oxygen and 3 to 6% water. Another popular catalyst containing 2,4-dichlorobenzoyl peroxide at 2.1% active oxygen and 8-10% water is CADOX TS-50, available from Noury Initiators, Burt, New York. This peroxide, however, is not vinyl specific and it effects cross-linking through both methyl and vinyl groups.

One particular siloxane composition, defined herein as the Base Composition and described below, contained from about 0.9 to about 1.0 parts of a flame retardant masterbatch and was cured with 1.2 weight percent of the peroxide. The cured composition displayed a self-extinguishing time of less than 16.0 seconds when subjected to the Boeing Burn Test D6-8099, C548. The 2,4-dichloro-benzoylperoxide is preferred for hot air vulcanization, due to a very short half life at 287°F. Unfortunately, the peroxide produces hazardous polychlorinated biphenyls (PCBs), forming unsafe compositions.

Recently, fabricators have elected to utilize a non-halogenated initiator such as 2,5-dimethyl-2,5-di(tert-butylperoxy)hexane, which has a half life of 24 minutes at 293°F and 9.92 weight percent active oxygen. This initiator is available as Lupersol 101 from Penwalt Corp. This non-halogenated peroxide initiator provides better scorch protection, higher molding temperatures and shorter cycle times than the chlorinated CADOX TS-50. Lupersol also produces no PCBs when heated. The problem with Lupersol 101 is that, when used with compositions having the same amount of flame retardant, self-extinguishing times are not less than 16 seconds and higher levels of char are formed when compared to using the Luperco CST.

It is desirable to produce polyorganosiloxane compositions which have improved flame retardancy. It is further desirable to provide a flame retardant system which can be used in a wide variety of polyorganosiloxane compositions to decrease both burn time and char length resulting from burn testing.

Although safe heat curable silicone rubber compositions having good tear strength, tensile strength and low compression set properties are known in the art, some safe compositions exhibit poor flame retardancy. It is desirable to provide heat cured silicone elastomer compositions having good physical properties including improved flame retardancy that enable their use in various applications including automotive gasketing.

## SUMMARY OF THE INVENTION

The present invention is based upon the discovery that the combination of platinum and a halogenated, aromatic di-ester can provide an improved flame retardant system for siloxane compositions. In particular, brominated aromatic di-esters or brominated aromatic diols are used in conjunction with platinum to provide a flame retardant system which enables short extinguishing times and minimal char formation when employed

in polyorganosiloxanes. Char formation, referred to as char length, is the length from the leading edge of a vertical strip to the furthest point on the strip exhibiting a change in surface characteristic after burn testing. The combination of the platinum and the halogenated aromatic di-ester provides a synergistic effect and flame retardant properties which are not expected when either flame retardant is used separately.

The flame retardant synergistic system is particularly useful in compositions which include polydiorganosiloxanes. The addition of the halogenated aromatic di-ester is not detrimental to the physical property profile over typical testing ranges.

Particular halogenated aromatic di-esters which have shown remarkable improvements in decreasing extinguishing times and char formation when used in conjunction with platinum, include brominated aromatic esters and brominated aromatic diols.

The "flame retardant additive" as described herein includes only the halogenated aromatic di-ester component and not the platinum. The combination of the platinum and the di-ester is herein referred to as a "synergistic flame retardant system" or a "synergistic system".

The halogenated aromatic di-esters preferably have one of two general formulas:

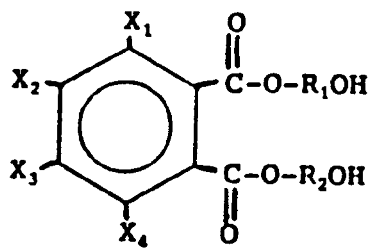

or

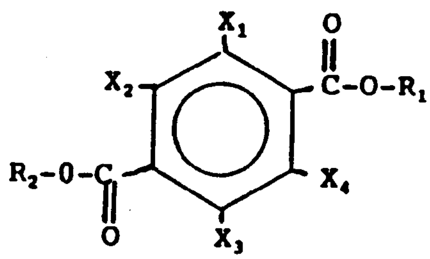

wherein $X_1$, $X_2$, $X_3$ and $X_4$ are each a halogen which may be the same as or different than the others, $R_1$ is selected from a hydrocarbon having 1-20 carbon atoms, an ether, and an alkenyl group having 2-20 carbon atoms, and $R_2$ is selected from a hydrocarbon having 1-20 carbon atoms, an ether, and an alkenyl group having 2-20 carbon atoms. If either $R_1$ or $R_2$ is an ether, it preferably has the formula $-R_3-O-R_4-$ wherein $R_3$ is a hydrocarbon chain having 1-20 carbon atoms, and $R_4$ is a hydrocarbon chain having 1-20 carbon atoms. It is expected that a meta-substituted di-ester in combination with platinum would also provide a beneficial synergistic flame retardant system.

## DETAILED DESCRIPTION OF THE INVENTION

The flame retardant synergistic system of the present invention comprises platinum and a reactive aromatic halogen bearing di-ester. The halogenated aromatic di-ester preferably has four halogen atoms substituted on the aromatic ring, a $COOR_1$ group and a $COOR_2$ group, wherein each halogen may be the same as or different than the others, and $R_1$ and $R_2$ are as described below. Preferably, the di-ester has the formula

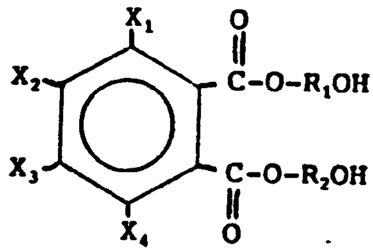

or

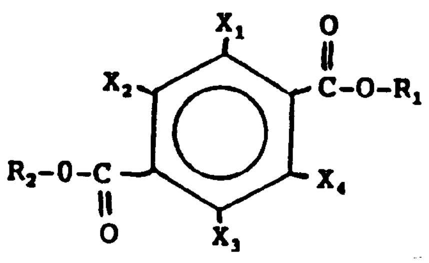

wherein $X_1$,$X_2$,$X_3$ and $X_4$ are each a halogen which may be the same as or different than the others, $R_1$ is selected from a hydrocarbon having 1-20 carbon atoms, an ether, and an alkenyl group having 2-20 carbon atoms, and $R_2$ is selected from a hydrocarbon having 1-20 carbon atoms, an ether, and an alkenyl group having 2-20 carbon atoms. If either $R_1$ or $R_2$ is an ether, it preferably has the formula $-R_3-O-R_4-$ wherein $R_3$ is a hydrocarbon chain having 1-20 carbon atoms, and $R_4$ is a hydrocarbon chain having 1-20 carbon atoms.

In a preferred formulation, $R_1$ is an ether of the formula $-R_3-O-R_4-$ wherein $R_3$ and $R_4$ are chosen from alkyl or alkenyl groups having 2-10 carbon atoms. In another preferred formulation, $R_2OH$ is an iso-substituted alcohol substituent. In yet another preferred formulation both $R_1$ and $R_2OH$ are as described above.

Bromine has proven to be an effective halogen for the X substituents, probably due to its limited reactivity when compared with chlorine and fluorine.

One flame retardant additive which is particularly useful to provide compositions exhibiting both short burn times and char length has the general formula

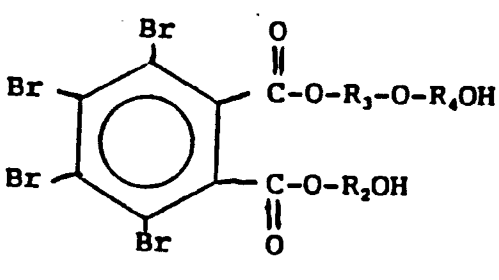

wherein $R_3$ and $R_4$ are aliphatic hydrocarbons having 2-10 carbon atoms, preferably alkanes, and $R_2$ is an aliphatic hydrocarbon chain having 2-10 carbon atoms.

More specifically, one flame retardant additive which has been tested and proven to provide compositions having desirable qualities, is a derivative of tetrabromophthalic anhydride diol which has the formula

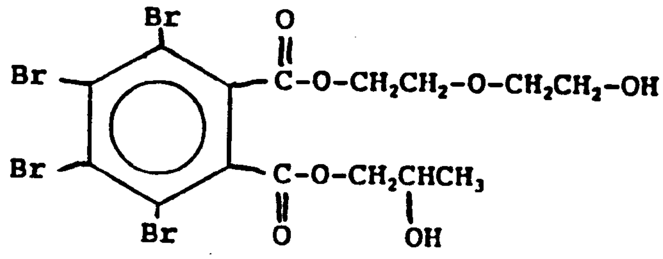

This compound has the nomenclature 3,4,5,6 tetrabromophthalic 1,2 benzene dicarboxylic acid mixed esters with diethylene glycol and 1,2 dihydroxy propylene glycol and is available as PHT-4 Diol from Great Lakes Chemical Corporation, West Lafayette, Indiana.

Another flame retardant additive which has been tested and proven to provide compositions having desirable qualities, is a derivative of tetrabromophthalic di-ester which has the formula

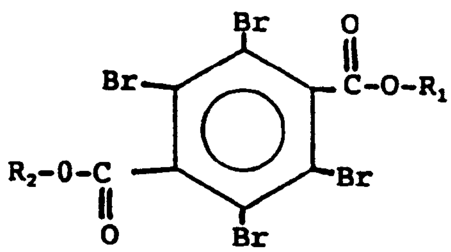

wherein $R_1$ and $R_2$ are each long chain saturated alkanes. When $R_1$ and $R_2$ are each $C_8H_{17}$ the additive is particularly useful and has the nomenclature 3,4,5,6-tetrabromo-1,2-benzene dicarboxylic acid; esters with octyl alcohol, available as DP-45 from Great Lakes Chemical Corporation.

PHT-4 diol and DP-45 have proven to be beneficial flame retardant additives over the range of about 0.5 to about 5.0 parts by weight based on 100 parts by weight of polymer composition, provided the composition contains from 1 to about 60 parts per million platinum, by weight based on the polymer portion of the composition. More preferred ranges of the additives are from about 1.0 to about 4.5 parts and even more preferably from about 2.0 to about 4.0 parts. These ranges are expected to be preferable for any of the di-ester additives of the present invention.

When higher amounts of platinum are employed, a greater amount of crosslinking is to be expected which may be detrimental to some of the physical properties of the composition, such as elasticity. For this reason, a preferred range of platinum for some applications is from 1 to about 60 ppm.

The flame retardant additive may be mixed with a curable polyorganosiloxane composition, curative, fillers and other compounding ingredients by conventional mill or internal mixing methods. Preferably, a peroxide curing agent and co-agent are preblended with the dry powders prior to adding to the rest of the composition on the mill or in an internal mixer.

While the flame retardant system of the present invention is believed to be useful in almost any polyorganosiloxane composition, particular siloxane compositions containing a substantial amount of polyorganosiloxane gum show significant improvements in flame retardancy when the flame retardant system is incorporated.

Among the polyorganosiloxane compositions which benefit from the flame retardant system are those including the components discussed below.

The present invention can be exemplified, but should in no way be considered limited to, the following compositions which are instructive in the use of the flame retardant system for achieving excellent retardancy to burn time and charring.

A flame retardant additive is added to a blend comprising at least one organopolysiloxane gum, an optional MQ or M D-vinyl Q resin or blends thereof, a silica filler, an optional vinyl-on-chain siloxane gum, and a cross-linking agent preferably of the organohydrogensiloxane type. The mixture produces a silicone elastomer which is curable in the presence of a catalyst to exhibit improved flame retardancy.

In one group of compositions, blends are formulated which comprise 100 parts by weight of a polymer system. The polymer system comprises at least one diorganopolysiloxane having a viscosity of about 3,000,000 to about 100,000,000 centipoise (cps) at 25°C, herein described as Components (A)-(E), and up to 30 parts by weight, based on 100 parts by weight of the at least one diorganopolysiloxane gum, of an MQ or M D-vinyl

Q resin copolymer or resin copolymer blend, Component (F).

The organopolysiloxane gum Components (A)-(E) may be used in various combinations or separately. The gum or gums should each have a viscosity of up to about 100,000,000 cps at 25°C. More preferably, gum components are used which have viscosities of from about 3,000,000 to about 100,000,000 cps at 25°C.

The gum or gums may be (A) free of vinyl groups, (B) vinyl-stopped, (C) vinyl-on-chain, (D) both vinyl-stopped and vinyl-on-chain, or (E) phenyl-modified, e.g. di-phenyl substituted. For purposes of clarification, Components (A)-(E) will be explained in greater detail below. The polymer systems of the compositions of the present invention are defined as 100 parts by weight. Any of the polymers (A)-(E) may make up the entire weight of the polymer system, a portion of the entire weight, or may be completely absent from the polymer system. The polymer system also includes the resin, Component (F), if used.

Up to 100 parts by weight of the polymer system may be Component (A), an organopolysiloxane substantially free of vinyl and having a viscosity of from about 3,000,000 to about 100,000,000 cps at 25°C. Component (A) may also comprise mixtures of such organopolysiloxanes.

Up to 100 parts by weight of the polymer system may be Component (B), a vinyl chain-stopped organopolysiloxane, substantially free of vinyl-on-chain, having a viscosity of from about 3,000,000 to about 100,000,000 cps at 25°C. Component (B) may also comprise mixtures of such organopolysiloxanes.

Up to about 100 parts by weight of the polymer system may be Component (C), a vinyl-on-chain organopolysiloxane, free of vinyl chain stops, having a vinyl content of about $5 \times 10^{-3}$ to about 5 weight percent and a viscosity of from about 3,000,000 to about 100,000,000 cps at 25°C. Component (C) may also comprise mixtures of such organopolysiloxanes.

Up to about 100 parts by weight of the polymer system may be Component (D), a vinyl chain-stopped, vinyl-on-chain organopolysiloxane having a vinyl content of about $5 \times 10^{-3}$ to about 5 weight percent. Component (D) may also comprise mixtures of such organopolysiloxanes.

Up to about 100 parts by weight of the polymer system may be Component (E), a phenyl-modified organopolysiloxane having a phenyl content of up to about 10 weight percent. In one example, component (E) may contain about 5.3 percent by weight di-phenyl groups. Component (E) may also comprise mixtures of such organopolysiloxanes.

In a preferred embodiment, at least one gum of the polymer system is Component (B), and preferably has the structure:

$$ViSiOR^1_2\ (SiOR^1_2)_x(SiOR^2_2)_y\ SiR^1_2Vi;$$

wherein Vi is vinyl and each $R^1$ is independently chosen from monovalent hydrocarbon free radicals free of aliphatic unsaturation and containing 1 to about 8 carbon atoms; each $R^2$ is independently chosen from monovalent hydrocarbon radicals containing 1 to about 8 carbon atoms; and x and y are integers chosen such that the viscosity is about 3,000,000 to about 100,000,000 cps at 25°. In other preferred embodiments, x and y are integers chosen such that Component (B) has a viscosity which ranges from about 3,000,000 to about 85,000,000 cps at 25°C and a weight percent vinyl concentration in the range from about $5 \times 10^{-3}$ to about $2 \times 10^{-2}$, preferably from about $8 \times 10^{-3}$ to about $1.5 \times 10^{-2}$ and more preferably from about $8.0 \times 10^{-3}$ to about $1.2 \times 10^{-2}$.

Like viscosity, penetration is another way of classifying elastomeric materials. Penetration is measured using Universal Penetrometer by Precision Scientific Model No. 73510 with a substantially air free sample. The sample penetration is measured at 25°C±1°C using a 100 g weight and a 1/4" diameter by 3/16" needle foot with rounded edges. The needle is lowered until it just touches the surface of the polymer. Then, the time to achieve up to 300 mm penetration is determined or the amount of penetration after 60 sec. Penetration gum is defined as:

$$\frac{\text{Depth of Penetration}}{\text{Time}} \times 60 \text{ sec. at } 25°C$$

Penetration may be controlled by controlling the molecular weight and the viscosity of the gum.

The vinyl polymer or polymers of Component (D) contain vinyl-on-chain groups and/or vinyl end-groups. In preferred embodiments, Component (D) has the formula:

$$ViSiOR^1_2\ (SiOR^1R^{Vi})_x(SiOR^2_2)_y\ SiR^1_2Vi$$

Wherein Vi is vinyl, $R^{Vi}$ is a vinyl radical having from 2 to about 10 carbon atoms, each $R^1$ is independently chosen from a vinyl radical having from 2 to about 10 carbon atoms, and a monovalent hydrocarbon radical, free of aliphatic unsaturation and containing 1 to about 8 carbon atoms, each $R^2$ is independently chosen from a vinyl radical having from 2 to about 10 carbon atoms, and a monovalent hydrocarbon radical, free of aliphatic unsaturation and containing 1 to about 8 carbon atoms, and x and y are integers, wherein x, y, $R^{Vi}$, $R^1$ and $R^2$ are chosen such that Component (D) has a weight percent vinyl concentration in the range from about $5 \times 10^{-3}$ to about 5 weight percent, preferably from about 0.01 to about 4, and more preferably from about 0.05 to about 4. The amount of Component (D) added to the blend may be increased when the vinyl concentration of Component (D) is low, and a lesser amount of Component (D) may be added when its vinyl concentration

is high. For example, when using a vinyl-on-chain gum having a vinyl content of about 4 weight percent, only about 0.5 part by weight based on the polymer system is added. When using a gum having a vinyl content of about 0.2 to about 0.6 weight percent, about 5 parts by weight can be added based on the polymer system.

The resin copolymer (F) may comprise (1) $R_3SiO_{1/2}$ monofunctional units (M units) and $SiO_2$ quadri-functional units (Q units), where each R is independently selected from the group consisting of vinyl radicals and monovalent hydrocarbon radicals free of aliphatic unsaturation. The ratio of M units to Q units ranges from about 0.5:1 to about 1.5:1, wherein about 0.5 to about 10.0 weight percent are vinyl groups.

Alternatively, the organopolysiloxane resin, Component (F), may comprise (2) an organopolysiloxane resin copolymer containing M and Q units as aforesaid and $R_2SiO_{2/2}$ difunctional (D units) where each R is independently selected from the group consisting of vinyl radicals and monovalent hydrocarbon radicals free of aliphatic unsaturation. Each M unit may represent M or M' e.g. M-vinyl units, and each D unit may represent D or D' e.g. D-vinyl units. The ratio of M units to Q units is from 0.5:1 to about 1.5:1 and the D units are present in an amount of from about 1 to 70 mol percent based upon the total number of mols of siloxy units in the copolymer. The resinous copolymer contains from about 0.5 to about 10.0 weight percent vinyl groups. The organopolysiloxane resin copolymer may contain mixtures of the MQ and the M D-vinyl Q, resins.

In addition to the exemplary polymer system made up of components (A)- (F), and based upon 100 parts by weight of the polymer system, the synergistic flame retardant systems of the present invention may be used in polyorganosiloxane compositions which also contain:

(G) up to about 200 parts based upon the polymer system of a finely divided inorganic filler, preferably a silica filler;

(H) up to about 100 parts based upon the polymer system of a vinyl-stopped, vinyl-on-chain polymer having from about $5x10^{-3}$ to about 5 weight percent vinyl; and (I) a random copolymer formed of a polydimethyl siloxane (PDMS) and a polymethyl hydrogen siloxane (PMHS) having the form:

$$R_3SiO(SiORHSiOR_2)_xSiR_3$$

wherein each R is independently chosen from a hydrogen or monovalent hydrocarbon radical free of aliphatic unsaturation containing 1 to about 8 carbon atoms, and x ranges from about 2 to about 100. In the present invention, the hydride is present in an amount ranging from about 0.1 to 10 parts by weight based on the polymer system, preferably 0.5 to 8, and more preferably 0.8 to 2.5 parts by weight. When a hydride agent is employed, a platinum catalyst may be substituted for the peroxide catalyst to cure the composition. In Component (I) x may vary so that (I) has a viscosity ranging from about 5 to 500 cps, preferably from about 10 to about 100 cps and more preferably from about 10 to 50 cps at 25°C.

Component (G) comprises from about 5 to about 200, preferably from about 10 to about 100 and more preferably from about 20 to about 50 parts by weight of reinforcing fillers such as $SiO_2$ based on the polymer system, Components (A)-(F). Examples of reinforcing fillers that may be used include fumed silica and precipitated silica, with fumed silica being preferred. The filler (G) may be pretreated or treated in-situ with various agents, for example cyclopolysiloxanes as disclosed in U.S. Patent No. 2,938,009 to Lucas and silazanes as disclosed in U.S. Patent No. 3,635,743 to Smith. The cyclopolysiloxanes may be, for example, a cyclotetramethyl siloxane present in the amount of about 15 to 20 weight percent of the filler (G).

Preferred fumed silica fillers may have a surface area of about 100 $m^2/g$ to about 300 $m^2/g$ and preferably about 160 $m^2/g$ to about 240 $m^2/g$. The higher surface area fillers tend to result in better properties, however, they are more expensive than the lower surface area fillers and require surface treatments or more processing aid to incorporate them into the gum.

In order to improve properties or processing, the composition may also contain:

(J) up to about 2 parts by weight of a tetramethyl-divinyl silazane based upon the polymer system; and

(K) up to about 10 parts by weight based upon the polymer system of a processing aid comprising low viscosity silanol stopped siloxane fluid of from about 3 to about 500 centipoise at 25°C, or a dimethyl trimethoxy siloxane polymer, or similar compositions such as silanol or methoxy fluids of other viscosities.

Component (J) may be employed in the form of a hydride cross-linking agent. In a preferred embodiment, Component (J) may be a random copolymer formed of a polydimethyl siloxane (PDMS) and a polymethyl hydrogen siloxane (PMHS) having the form:

$$R_3SiO(SiORHSiOR_2)_xSiR_3$$

wherein each R is independently chosen from a hydrogen or monovalent hydrocarbon radical free of aliphatic unsaturation containing 1 to about 8 carbon atoms, and x ranges from about 2 to about 100. In the present invention, Component (J) is present in an amount ranging from about 0.1 to 10 parts by weight based on the polymer system, preferably 0.5 to 8, and more preferably 0.8 to 2.5 parts by weight. When a hydride agent is employed, a platinum catalyst may be substituted for the peroxide catalyst to cure the composition. In Component (J) x may vary so that (J) has a viscosity ranging from about 5 to 500 cps, preferably from about 10 to about 100 cps and more preferably from about 10 to 50 cps at 25°C.

The linear hydride described above can be made by many procedures which are known in the art and particularly by the hydrolysis of appropriate chlorosilanes. See for example, U.S. Patent No. 4,041,101 which is incorporated herein by reference. In the Examples below, Component (J) has a viscosity of about 30 centistokes, a hydride content of about 0.8 percent by weight, and a chain length of about 100 units.

Component (K) is a vinyl terminated silazane coupling agent and surface treatment for the filler which may take the form:

$$ViSiR_2NHSiR_2Vi$$

wherein R is an organic such as $CH_3$. The coupling agent promotes bonding between gum components (A)-(E) of the polymer system and (G) and between the resin components (F) and (G), and may be applied to the reinforcing filler, Component (G), prior to mixing with the other components.

Component (K) may be vinyl stopped linear silazane such as tetramethyl-divinyl silazane. The material is added for enhancing the bonding of filler to polymer. In the present invention, the silazane also acts as a filler treatment in-situ.

Component (K) is preferably present in an amount of up to about 2 parts by weight, more preferably up to about 0.3 parts by weight based on the weight of the polymer system. Component (K) may be present in an amount of only about 0.03 parts by weight based on 100 parts of the polymer system, however, slightly higher amounts are preferred.

In addition to, in conjunction with, or in place of Component (K), small amounts of hexamethyl disilazane may be used to treat fumed silica filler prior to mixing the filler with the other components, or in-situ. If used, up to about 20 parts by weight of hexamethyl disilazane is added based on 100 parts of Component (G).

Additionally, a cyclic methyl tetramer at about 15 to about 20 percent by weight based upon the weight of the filler (G) may be used to treat the filler (G) prior to compounding.

Other components may also be employed as discussed hereinafter. For example, in order to allow for easier incorporation of the filler in the polymer system, Component (L), a processing aid or plasticizer is employed. In the preferred embodiment, Component (L) is a low viscosity silanol or methoxy stopped siloxane fluid having a viscosity ranging from about 3-500 cps and preferably 3 to 50 cps at 25°C. The siloxane fluid is an equilibrium mix of low molecular weight oligomers of about 4 to about 10 D units, preferably between 4 and 6 repeating units in length with a minimum amount of cyclics in equilibrium with the oligomers. The processing aid (L) may have the form of $(R_2SiO_{1/2})_xOH$ or $(R_2SiO_{1/2})_xOR^1$ where each R is $CH_3$, each $R^1$ is an alkyl, and x is between 4 and 10, preferably between 4 and 6, with resulting cyclics of the same number of units in equilibrium. Di- and tri-alkoxy terminated siloxanes such as trimethoxy siloxane may also be used as process aids.

Component (L) may have the formula:

$$R^3O(R_2SiO)_xR^3$$

wherein each R is $CH_3$, and x is between 4 and 10 and preferably between 4 and 6, with resulting cyclics in the same number of units in equilibrium; and $R^3$ is selected from the group consisting of alkyl radicals having 1 to about 8 carbon atoms and hydrogen, with hydrogen being preferred.

The processing aid is preferably present in amounts between 2 and 10 parts by weight based on the polymer system, preferably between 2.5 and 5.0 parts by weight and most preferably about 3.5 parts by weight based on the polymer system. It should be understood that typically the more filler that is used the greater amount of processing aid is employed. In one example, Component (L) has a silanol content of about 7.5 % by weight although a silanol content of about 5 to about 10 weight percent is expected to provide good results.

A small amount of water may also be added to increase the processibility of the blend. If used, only up to about 0.1 parts by weight water based on the polymer system is usually employed.

To improve the heat-age resistance of the cured compositions of the present invention, Component (M), a heat-age additive, may be employed. The heat aging component such as fumed $TiO_2$, iron octoate, $Ce(OH)_4$, or mixtures thereof, may be present in relatively small amounts, e.g., up to 2 parts by weight based upon the polymer system. In one example, the heat aging component (M) consists of 33 weight percent $TiO_2$, 5 weight percent iron octoate (12% iron in mineral spirits), 10 weight percent treated fumed silica (160 $m^2/g$), and 50 weight percent of an 800 penetration vinyl-stopped, vinyl-on-chain gum.

Only up to about two parts by weight Component (M) is needed based on the polymer system to improve the heat-age characteristics of the composition.

An acid acceptor, such as MgO or ZnO, Component (N), may also be added in amounts from 0.5 to about 10 parts by weight based on the polymer system. This acid could otherwise cause cleavage of the product matrix.

Other components which may be added to blends in which the flame retardant system of the present invention may prove beneficial, include, but are not limited to:

(O) a heat-age additive comprising cerium hydroxide, preferably about 75% by weight, masterbatched in polydimethylsiloxane fluid having a viscosity of about 30,000 cps at 25°C.

(P) which is a coloring agent comprising 57% carbon black dispersed in vinyl-polydimethyl siloxane fluid available as K8124 from Kenrich Petrochemicals, Bayonne, New Jersey; and

(Q) which is zinc oxide (ZnO) added as an amphoteric scavenger for improving resistance to lubricating oils.

When added to heat curable silicone elastomer compositions, the synergistic flame retardant systems of the present invention provide heat curable compositions which exhibit improved flame retardancy. These properties are exhibited throughout extended periods of use at high temperatures making these compositions useful in automotive gasketing applications.

In order that those skilled in the art will be better able to practice the invention, the following examples are given by way of illustration and not by way of limitation.

EXAMPLES I-VI

A base composition was prepared to which were added differing amounts of two flame retardant additives, PHT-4 Diol and DP-45. While the flame retardant system of the present invention is believed to be useful in many polyorganosiloxane compositions, one exemplary composition is described as follows. All components are described in parts by weight.

BASE COMPOSITION

The Base Composition comprises a variety of siloxane gum components. In particular, 35 parts by weight were used of a vinyl chain-stopped polydiorganosiloxane gum having about 0.5 percent by weight vinyl content, about 6000 to 7000 D units, and a penetration of about 800 +/- 50. Another gum, which was used at 36.5 parts, was a polydimethylsiloxane gum having about 7000 D units, no vinyl, methyl chain-stops, and a penetration of about 800 +\- 50. About 14.0 parts of a phenyl-modified gum was also used, which contained 5.3 percent diphenyl D groups, 0.05 percent vinyl-on-chain, vinyl chain-stops, and a penetration of about 350 +\- 100. Ten parts of a similar diphenyl gum were also added which differed only in that it was methyl chain-stopped instead of vinyl chain-stopped. The final gum component, which was added in an amount of 4.5 parts, was a methyl-stopped polydiorganosiloxane gum having a vinyl content of about 13 percent by weight and an average viscosity of about 4600 to 4900 poise.

The Base Composition also contained many additives. Distilled water was added in an amount of 0.4 parts, although it is believed that some or all of the distilled water had evaporated by the end of curing the composition. A rare earth octoate, available as R.E.O. from Interstab Chemicals, Akzo Chemie America, New Brunswick, New Jersey, containing cerium was added in an amount of 0.2 parts. Octamethylcyclotetrasiloxane, described as a $D_4$ tetramer, was also added in an amount of 5.0 parts. A methoxy-stopped process aid was added at a level of 2.0 parts and contained dimethyl, trimethoxy siloxanes containing 5.5 to 8 percent methoxy and exhibiting a viscosity of between 5 and 11 centistokes. Another process aid was added at a level of 4.5 parts in the form of a silanol-stopped siloxane fluid containing about 7.5 percent by weight silanol and having a viscosity of about 35 centistokes at 25°C.

A fumed silica filler available as MS-5 from Degussa Corporation, Ridgefield Park, New Jersey, was added to the base composition at a level of 39.0 parts. A filler treatment additive in the form of hexamethyldisilizane, which is about 95 percent pure, was added at a level of about 2.0 parts.

Finally, the base composition contained 0.9 parts of a finely powdered magnesium oxide, 14.5 parts hydrated alumina, and 0.45 parts of a 1.5 percent platinum containing catalyst, as described below.

Table 1 shows the property profile of the base composition.

TABLE 1

| PROPERTY PROFILE | | |
|---|---|---|
| EXAMPLE | MIN | MAX |
| SHORE A | 50 | 60 |
| TENSILE, psi | 900 | |
| ELONGATION, % | 350 | |
| DIE B TEAR, pi | 150 | |
| SPG | 1.19 | 1.25 |
| COMPRESSION SET % 70 HRS/100°C | | 30 |
| VERTICAL FLAME TEST | | |
| GLOW TIME, SEC | | 15 |
| CHAR LENGTH, IN. | | 6 |

The base composition was prepared and mixed with differing amounts of the two flame retardant additives, PHT-4 Diol and DP45, to form the compositions shown in Table 2 below. The DP45 was added directly to the base composition (neat) whereas the PHT-4 Diol was added as a masterbatch.

All compositions were cured with a peroxide masterbatch containing 36.5% by weight peroxide obtained by mixing Lupersol 101® with Viscosil® 30,000 cps (from General Electric Company, Waterford, N.Y.). The Lupersol 101® is 45% active on a calcium carbonate carrier. The masterbatch is in the form of a paste having 36.5% $CaCO_3$ and 27% of the silicone fluid. Approximately 1.5 parts of the masterbatch is required to provide 0.5 parts of active peroxide.

The base composition contained 40 ppm platinum available from a platinum catalyst masterbatch. Although many sources of platinum catalyst can be employed, the platinum catalyst masterbatch specifically contained, by weight, 3.7 parts chloroplatinic acid (equivalent to 1.5 parts Pt, 74 parts methylvinyltetramer, 17.8 parts ethanol 2B (2% benzene) and 4.5 parts sodium bicarbonate. The platinum catalyst masterbatch was added in an amount of 0.45 parts by weight based on 169 total parts, the equivalent of 0.27% by weight.

TABLE 2

| | EXAMPLE | | | | | |
|---|---|---|---|---|---|---|
| COMPONENT | I | II | III | IV | V | VI |
| Base Composition | 100 | 100 | 100 | 100 | 100 | 100 |
| DP 45 | 4 | 4 | - | - | - | - |
| PHT-4 Diol | - | - | 2 | 4 | 4 | - |
| Perioxide Masterbatch | 1.2 | 0.8 | 1.2 | 1.2 | 0.8 | 1.2 |

Table 3 below shows the physical properties and flame test results of Examples I-VI tested after the compositions were catalyzed, press cured for ten minutes at 350°F, then post baked two hours at 400°F.

TABLE 3

| | EXAMPLE | | | | | |
|---|---|---|---|---|---|---|
| PHYSICAL PROPERTIES | I | II | III | IV | V | VI |
| Shore A | 50 | 50 | 54 | 54 | 53 | 51 |
| Tensile, psi | 1020 | 1015 | 1065 | 1025 | 940 | 1072 |
| Elongation, % | 835 | 845 | 760 | 780 | 845 | 596 |
| Die B Tear, ppi | 182 | 187 | 176 | 169 | 198 | 175 |
| SPG | 1.221 | 1.220 | 1.226 | 1.234 | 1.232 | - |
| FLAME TEST | | | | | | |
| Burn Time, secs | 16 | 9.0 | 2.0 | 1.5 | 1.0 | >16.0 |
| Char Length, inches | 1.5 | 0.2 | 0.1 | 0.1 | 0.1 | >2.0 |

The flame test was conducted as per Boeing Vertical Burn Test D6-8099. This test employs a 3-inch by 6-inch by 0.75-inch strip which has been press cured for 10 min. at 350°F under 50,000 psi pressure, then post baked at 400°F in an air circulating oven for 2 hours (as per Boeing BMS 1-59). The strip prepared in this manner is then exposed to methane gas flame until ignition for the time stated or up to a maximum of 60 seconds.

EXAMPLES VII - XVI

TABLE 4

| COMPONENT | VII | VIII | IX | X | XI | XII | III | XIV | XV | XVI |
|---|---|---|---|---|---|---|---|---|---|---|
| Base Composition | 100 | 100 | 100 | 100 | 100 | 100 | 100 | 100 | 100 | 100 |
| PHT-4 Diol Masterbatch | - | - | 1.25 | 2.5 | 3.75 | 5.0 | 1.25 | 2.5 | 3.75 | 5.0 |
| Peroxide Masterbatch | 0.8 | 1.2 | 0.8 | 0.8 | 0.8 | 0.8 | 1.2 | 1.2 | 1.2 | 1.2 |

TABLE 5

| PHYSICAL PROPERTIES | | | | | | | | | | |
|---|---|---|---|---|---|---|---|---|---|---|
| | VII | VIII | IX | X | XI | XII | XIII | XIV | XV | XVI |
| Shore A | 52/54 | 54 | 56 | 56 | 55 | 55 | 57.5 | 57 | 57.5 | 58 |
| Tensile, psi | 992 | 928 | 1046 | 1031 | 1000 | 941 | 1079 | 1038 | 1040 | 985 |
| Elongation, % | 791 | 648 | 665 | 694 | 727 | 747 | 621 | 638 | 677 | 665 |
| Die B Tear, ppi | 166 | 156 | 156 | 162 | 181 | 185 | 140 | 150 | 154 | 168 |
| SPG | 1.225 | - | 1.215 | - | - | - | - | - | - | - |
| FLAME TEST | | | | | | | | | | |
| Self Extinguish Time Seconds | 1.0 | 0 | 0 | 0 | 0 | 28.8 | 0 | 0 | 0 | 23.0 |
| Char Length, inches | 1.0 | 1.0 | 0.75 | 0.75 | 1.0 | 1.25 | 0.75 | 0.75 | 1.0 | 1.2 |

The effect of the brominated phthalate esters additive is the formation of a synergistic system with platinum. The preferred range of the additive is between 2 and 4 parts with 40 ppm of the noble metal. Levels of the diol greater than 5.0 parts increase the burn time and degree of char formation. The brominated phthalic di-esters themselves over the synergistic range do not invoke flame retardancy. Only in concert with the platinum is the system effective.

The addition of antimony oxide to the synergistic system does not appear to be beneficial and only serves to increase the burn time.

In particular, the PHT-4 diol is preferred. The diol is preferably used over the range of 2 to 4 parts when added directly (neat), that is, not as a masterbatch.

The DP-45 which is described by Great Lakes Chemical as a flame retardant plasticizer for PVC and organic elastomers also forms a synergistic flame retardant system with platinum, however, the effect is not as dramatic.

The addition of the brominated aromatic di-ester additives does not appear to be detrimental to the physical property profiles over the range tested. In general, it is evident that amelioration has taken place in both the % elongation and resistance to tear, which may be attributed to possible plasticization. The direct addition of the additives either on the mill or in a doughmixer tends to initially make the compounds somewhat sticky, but this problem disappears with the complete incorporation and dispersion of the additive. Although the preferred mode of addition is neat (direct addition to the composition), a masterbatch can be prepared which is only slightly tacky and which precludes the aforementioned problem while facilitating incorporation. The masterbatch can be made with or without the platinum component of the synergistic system. As shown in Tables 6 and 7 below the addition of the platinum bearing masterbatch to SE6160, a silicone elastomer described below, also has a significant impact upon compounds when cured with CADOX TS-50. One particular impact is a dramatic decrease in burn time and in the % consumed.

The addition of antimony oxide ($Sb_2O_3$), a known synergist for halogenated systems, does not appear to be beneficial since it increases the length of the burn time and the amount of char.

Either of the particular brominated aromatic diesters discussed above may be easily added to a heat curable rubber (HCR) compound via a masterbatch. It is expected that any of the halogenated aromatic di-esters of the flame retardant systems of the present invention may be added to an HCR composition via a masterbatch.

Another set of compositions, Examples XVII-XXI, having the components listed below in Table 6. Each composition contained 100 parts by weight of a silicone elastomer having a Shore A durometer of 60. The elastomer is available as SE6160 from GE silicones, Waterford, N.Y. The elastomer requires no post cure in most applications, has specific gravity of 1.20 +/- 0.03, is translucent, has a polymer classification of VMQ according to ASTM D-1418, and has a Williams Plasticity of 350 according to ASTM D-926.

The elastomer was mixed with 80 parts by weight of a non-reinforcing 5 micron particle size crystalline silica filler. Each composition was then mixed with 1.0 part by weight of a magnesium oxide masterbatch, available as SE6910MO from GE Silicones, to eliminate the need to post cure the elastomer when bis (2,4-dichlorobenzoyl) peroxide, 50% paste, is used as a catalyst. The masterbatch has a specific gravity of 1.20 +/- 0.5, a gray appearance, and a polymer classification of VMQ according to ASTM D-1418.

A flame retardant was then added to each composition in the form of a masterbatch. The masterbatch comprised 200 parts by weight of a gum mixture described below, 8 parts by weight of a 1.5 to 2.0 weight percent platinum complex catalyst in solution in excess methylvinyl tetramer, and 200 parts by weight of an 80:20 weight ratio mixture of PHT-4 diol and tetramer-treated fumed silica having an average surface area of about 160 $m^2/g$. The gum mixture contained 100 parts by weight vinyl chain-stopped polydiorganosiloxane gum having about 0.5 percent by weight vinyl and a penetration of about 900, 1.0 part by weight of a methoxy-stopped siloxane process aid having a viscosity of 5 to 11 centistokes at 25°C and a methoxy content of 5.5 to 8 percent, 1.0 part by weight of a silanol-stopped siloxane fluid having a viscosity of about 35 centistokes at 25°C and a silanol content of about 7.5 percent, and 29 parts by weight of a tetramer-treated fumed silica having an average surface area of about 160 $m^2/g$.

Each composition was catalyzed with either CADOX TS-50 or Lupersol 101. When catalyzed with CADOX TS-50, the compositions were heated at 287°C for 15 minutes. The composition catalyzed with Lupersol 101 was heated at 350°F for 15 minutes. The properties of the compositions (Examples XVII-XXI) after press curing are shown in Table 7 below.

Table 6

| Component | XVII | XVIII | XIX | XX | XXI |
|---|---|---|---|---|---|
| SE6160 | 100 | 100 | 100 | 100 | 100 |
| Silica | 80 | 80 | 80 | 80 | 80 |
| SE6910MO | 1.0 | 1.0 | 1.0 | 1.0 | 1.0 |
| Flame Retardant | 1.0 | 2.0 | 4.0 | 3.0 | 3.0 |
| TS-50 | 1.5 | 1.5 | 1.5 | 1.5 | -- |
| Lupersol 101 | -- | -- | -- | -- | 1.2 |

Table 7

| Property | XVII | XVIII | XIX | XX | XXI |
|---|---|---|---|---|---|
| Shore A | 69 | 66 | 60 | 62 | 75 |
| Tensile, psi | 784 | 760 | 732 | 788 | 720 |
| Elongation, % | 405 | 468 | 585 | 543 | 277 |
| 100% Modulus | 433 | 349 | 255 | 309 | 500 |
| Specific Gravity | 1.534 | 1.536 | 1.532 | 1.531 | -- |
| Flame Test U-48 | | | | | |
| % Consumed | 12.2 | 5.4 | 5.4 | 8.3 | 8.9 |
| Burn Time (sec) | 62.5 | 41.1 | 38.5 | 51.3 | 52.4 |
| Volume Resistivity | $1.2 \times 10^{15}$ | $6.4 \times 10^{14}$ | $2.1 \times 10^{14}$ | $3.0 \times 10^{14}$ | $4.2 \times 10^{14}$ |

The flame retardant additive is particularly useful with blends of fluorohydrocarbons and fluorosilicones. The di-ester is soluble in the blends due to the ether linkages and is not attacked by aliphatics and aromatics. Thus, the di-ester is not destroyed in the reaction of the polymers. It is believed that the di-ester acts as an interfacial wetting agent which is compatible by itself with either the fluorohydrocarbon or the fluorosilicone, which are generally not compatible with each other. The di-ester is soluble in either fluoro-compound and facilitates their cross-linking. In general, halogenated ethers are soluble in either.

The flame retardant additive is preferably used in blends with fluorosilicones to obtain compositions having a combination of good physical properties, heat and fluid resistance, and low temperature brittle points. These compounds are extremely useful in automotive applications where the heat and chemical resistance of a siloxane composition is required along with improved flame retardancy.

The synergistic systems of the present invention using PHT-4 diol have proven to be particularly useful in fluorohydrocarbon-fluorosilicone blends to render such blends flame retardant when subjected to burn tests. Compositions having about 3.7 parts by weight the derivative of tetrabromophthalic anhydride diol have shown very little consumption. Compounds having about 7.0 parts by weight of the derivative have shown extinguishing times of less than 1 second. Table 8 shows the components in the various compositions which were burn-tested. Tables 9, 10 and 11 show test results of various burn tests. The compositions having zero percent of the derivative had first and second burn times of 7 and 115 seconds, respectively, and a consumption of 100 percent. Base compound 4, which had 1.6 parts per weight derivative, had comparable burn times and also a 100 percent consumption, as is shown in Table 9.

TABLE 8

| BURN TEST MEASUREMENT COMPOSITIONS | | | | | | | |
|---|---|---|---|---|---|---|---|
| Base Compound | 1 | 2 | 3 | 4 | 5 | 6 | 7 |
| Fluorohydrocarbon | 33 | 70 | 51 | 33 | 51 | 58 | 64 |
| Fluorosilicone HMW Polymers | 67 | 30 | 49 | 67 | 27 | 14 | 36 |
| Fluorosilicone-PDMS copolymers | - | - | - | - | 22 | 28 | - |
| M-stopped pdms PDMS with 13.4m% vinyl in chain | 0.4 | 5 | 5 | 5 | 3 | 3 | 0 |
| Tetrabromophthalic anhydride diol | 0 | 7.0 | 3.7 | 1.6 | 3.7 | 3.7 | 7.0 |

TABLE 9

| MODIFIED UL 94 BURN TEST: TWO IGNITIONS - 10 SECONDS EACH | | | | | | | |
|---|---|---|---|---|---|---|---|
| Base Compound | 1 | 2 | 3 | 4 | 5 | 6 | 7 |
| Extinguishing Time (Seconds) | | | | | | | |
| 1st Burn | 7.0 | 0 | 0.5 | 6.5 | 0.5 | 0.5 | 0 |
| 2nd Burn | 115 | 0 | 5.0 | 62 | 10.0 | 1.5 | 1 |
| Consumption (%) | 100 | 1.0 | 0.5 | 100 | 1.6 | 0.5 | 9 |

TABLE 10

| UL 94 BURN TEST: THREE IGNITIONS, TWO AT 6.0 SECONDS AND ONE FOR 15 SECONDS | | | | | | | |
|---|---|---|---|---|---|---|---|
| Base Compoung | 1 | 2 | 3 | 4 | 5 | 6 | 7 |
| Extinguishing Time (Seconds) | | | | | | | |
| 1st Burn | - | 1.0 | - | - | - | - | - |
| 2nd Burn | - | 1.0 | - | - | - | - | - |
| 3rd Burn | - | 1.0 | - | - | - | - | - |
| Consumption (%) | - | <1.0 | - | - | - | - | - |

TABLE 11

BOEING D6-8099 This test employs a 3-inch by 6-inch by 0.75-inch strip which has been press cured for 10 min. at 350°F under 50,000 psi pressure, then post baked at 400°F in an air circulating oven for 2 hours (as per Boeing BMS 1-59). The strip prepared in this manner is then exposed to methane gas flame until ignition for the time stated or up to a maximum of 60 seconds.

Extinguishing Times (Seconds) This is the time measured from the time the methane flame is removed until the flame on the strip extinguishes.

| Base Compound | 1 | 2 | 3 | 4 | 5 | 6 | 7 |
|---|---|---|---|---|---|---|---|
| Ignition Times | | | | | | | |
| First Trial (12 seconds) | - | 2.6 | - | - | 0.6 | - | - |
| Second Trial (15 seconds) | - | 1.6 | - | - | 0.6 | - | - |
| First Trial (60 seconds) | - | - | - | - | - | 1.0 | - |
| Second Trial (15 seconds) | - | - | - | - | - | 0.9 | - |
| First Trial (12 seconds) | - | - | - | - | - | - | 1.0 |
| Consumption (%) | - | <1.0 | - | - | <1.0 | <1.0 | <1.0 |

Although the present invention has been described in connection with preferred embodiments, it will be appreciated by those skilled in the art that additions, modifications, substitutions and deletions not specifically described may be made without departing from the spirit and scope of the invention defined in the appended claims.

## Claims

1. A heat curable silicone rubber composition comprising a polymer system and a flame retardant additive, said polymer system containing:
   (A) up to 100 parts by weight of an organopolysiloxane having a viscosity of about 3,000,000 to about 100,000,000 cps at 25°C and substantially no vinyl, or mixtures of such organopolysiloxanes;
   (B) up to 100 parts by weight of a vinyl-stopped organopolysiloxane, substantially free of vinyl-on-chain, having a viscosity of about 3,000,000 to about 100,000,000 cps at 25°C, or mixtures of such organopolysiloxanes;
   (C) up to 100 parts by weight of a vinyl-on-chain organopolysiloxane, free of vinyl end stops, having a

vinyl content of about $5x10^{-3}$ to about 5 weight percent and a viscosity of about 3,000,000 to about 100,000,000 cps at 25°C, or mixtures of such organopolysiloxanes;

(D) up to 100 parts of a vinyl-stopped, vinyl-on-chain organopolysiloxane having a vinyl content of about $5x10^{-3}$ to about 5 weight percent, or mixtures of such organopolysiloxanes;

(F) up to about 30 parts by weight based upon 100 parts of the total of Components (A)-(D) of an organopolysiloxane resin copolymer comprising:

1) $R_3SiO_{1/2}$ units (M units) and $SiO_2$ units (Q units) where each R is independently selected from the group consisting of vinyl radicals and monovalent hydrocarbon radicals free of aliphatic unsaturation with a ratio of M units to Q units ranging from 0.5:1 to about 1.5:1, where the copolymer contains from about 0.5 to 10 weight percent vinyl groups, or

2) $R_3SiO_{1/2}$ units (M units), $SiO_2$ units (Q units) and $R^{Vi}{}_2SiO_{2/2}$ units (D vinyl units) where each R is as defined above and each $R^{Vi}$ is a vinyl containing radical having from 2 to about 10 carbon atoms, and where the ratio of M units to Q units is from 0.5:1 to about 1.5:1, and the D vinyl units are present up to about 70 mol percent based upon the total number of mols of siloxy units in the copolymer, and where the resinous copolymer contains from about 0.5 to about 10.0 weight percent vinyl groups, or

3) mixtures of 1 and 2;

such that the total of Components (A)-(F) equals 100 parts by weight,

said silicone rubber composition further comprising:

(G) up to about 200 parts by weight based upon the polymer system of a finely divided filler;

from about 1 to about 60 parts per million platinum, by weight based on the polymer system; and

from about 0.5 to about 5.0 parts by weight based on the polymer system of a flame retardant additive having the general formula

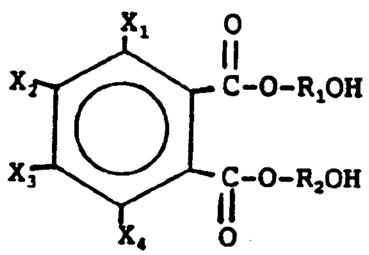

or

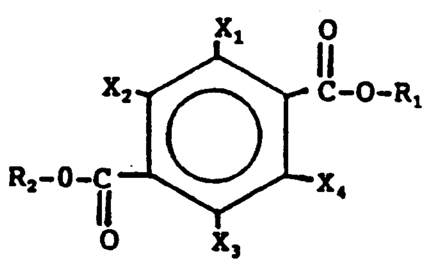

wherein $X_1$, $X_2$, $X_3$ and $X_4$ are each a halogen which may be the same as or different than the others, $R_1$ is selected from a hydrocarbon having 1-20 carbon atoms, an ether, and an alkenyl group having 2-20 carbon atoms, and $R_2$ is selected from a hydrocarbon having 1-20 carbon atoms, an ether, and an alkenyl group having 2-20 carbon atoms.

2. A composition as defined in claim 1, wherein said flame retardant additive is a derivative of tetrabromophthalic anhydride diol having the formula

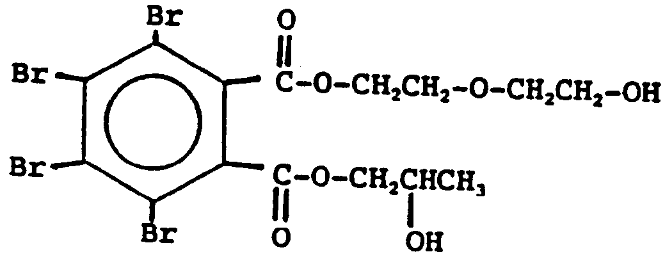

3. A composition as defined in claim 1, wherein said platinum is present in an amount of from about 1 to about 60 parts per million, by weight based on the polymer system.

4. A composition as defined in claim 1, wherein said flame retardant additive is a di-ester having the formula

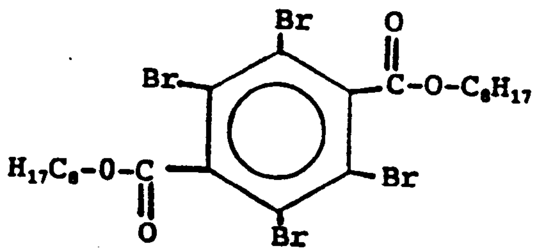

5. A composition as defined in any preceding claim, further comprising :
(J) up to about 2 parts by weight of a tetramethyl-divinyl silazane based on 100 parts by weight of the polymer system.

6. A composition as defined in any preceding claim, further comprising :
(K) up to about 10 parts by weight based upon the polymer system of a silanol stopped siloxane fluid having a viscosity of about 3 to about 500 cps at 25°C.

7. A composition as defined in any preceding claim, further comprising Component (M) up to about 2 parts by weight based upon the polymer system of a heat-age additive.

8. A composition as defined in any preceding claim, further comprising Component (N), up to about 10 parts based on the polymer system of an acid acceptor.

9. A heat cured silicone rubber composition comprising a polymer system and a flame retardant additive, said polymer system containing:
(A) up to 100 parts by weight of an organopolysiloxane having a viscosity of about 3,000,000 to about 100,000,000 cps at 25°C and substantially no vinyl, or mixtures of such organopolysiloxanes;
(B) up to 100 parts by weight of a vinyl-stopped organopolysiloxane, substantially free of vinyl-on-chain, having a viscosity of about 3,000,000 to about 100,000,000 cps at 25°C, or mixtures of such organopolysiloxanes;
(C) up to 100 parts by weight of a vinyl-on-chain organopolysiloxane, free of vinyl end stops, having a vinyl content of about $5x10^{-3}$ to about 5 weight percent and a viscosity of about 3,000,000 to about 100,000,000 cps at 25°C, or mixtures of such organopolysiloxanes;
(D) up to 100 parts of a vinyl-stopped, vinyl-on-chain organopolysiloxane having a vinyl content of about $5x10^{-3}$ to about 5 weight percent, or mixtures of such organopolysiloxanes;
(F) up to about 30 parts by weight based upon 100 parts of the total of Components (A)-(D) of an organopolysiloxane resin copolymer comprising:
1) $R_3SiO_{1/2}$ units (M units) and $SiO_2$ units (Q units) where each R is independently selected from the group consisting of vinyl radicals and monovalent hydrocarbon radicals free of aliphatic unsaturation with a ratio of M units to Q units ranging from 0.5:1 to about 1.5:1, where the copolymer contains from about 0.5 to 10 weight percent vinyl groups, or
2) $R_3SiO_{1/2}$ units (M units), $SiO_2$ units (Q units) and $R^{Vi}{}_2SiO_{2/2}$ units (D vinyl units) where each R is

as defined above and each $R^{Vi}$ is a vinyl containing radical having from 2 to about 10 carbon atoms, and where the ratio of M units to Q units is from 0.5:1 to about 1.5:1, and the D vinyl units are present up to about 70 mol percent based upon the total number of mols of siloxy units in the copolymer, and where the resinous copolymer contains from about 0.5 to about 10.0 weight percent vinyl groups, or

3) mixtures of 1 and 2;

such that the total of Components (A)-(F) equals 100 parts by weight,

said silicone rubber composition further comprising:

(G) up to about 200 parts by weight based upon the polymer system of a finely divided filler;

from about 1 to about 60 parts per million platinum, by weight based on the polymer system; and

from about 0.5 to about 5.0 parts by weight based on the polymer system of a flame retardant additive having the general formula

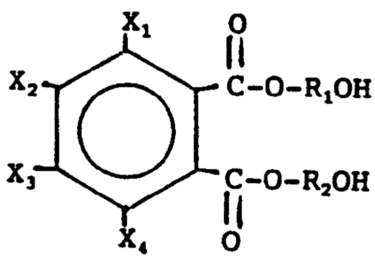

or

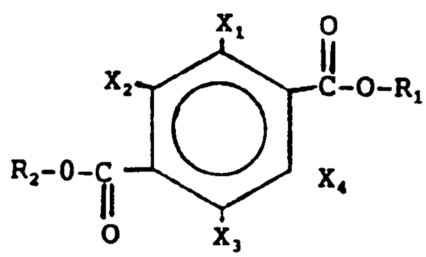

wherein $X_1$, $X_2$, $X_3$ and $X_4$ are each a halogen which may be the same as or different than the others, $R_1$ is selected from a hydrocarbon having 1-20 carbon atoms, an ether, and an alkenyl group having 2-20 carbon atoms, and $R_2$ is selected from a hydrocarbon having 1-20 carbon atoms, an ether, and an alkenyl group having 2-20 carbon atoms.

**10.** A polyorganosiloxane composition comprising a polymer system,

between 1.0 and about 60 parts per million platinum, by weight based on said polymer system, and a flame retardant additive of the general formula

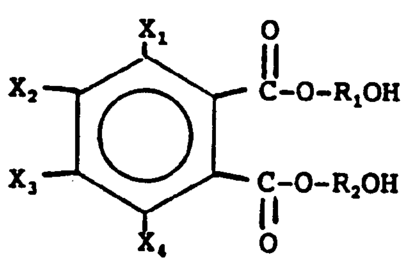

wherein $X_1$, $X_2$, $X_3$ and $X_4$ are each a halogen which may be the same as or different than the others, $R_1$ is selected from a hydrocarbon having 1-20 carbon atoms, an ether, and an alkenyl group having 2-20 carbon atoms, and $R_2$ is selected from a hydrocarbon having 1-20 carbon atoms, an ether, and an alkenyl group having 2-20 carbon atoms.

**11.** A polyorganosiloxane composition as defined in claim 10, wherein said polymer system comprises a fluorohydrocarbon and a fluorosilicone.

European Patent Office

# EUROPEAN SEARCH REPORT

Application Number
EP 93 30 3671

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | WO-A-9 116 389 (ATOCHEM NORTH AMERICA, INC.)<br>* page 13, line 12 - line 22; claims 1-5 *<br>* page 22, line 1 - line 5; page 26, left column, fourth compound from top *<br>* examples 8,57 * | 1,2,4,9,10 | C08K5/12<br>C08L83/04 |
| Y | EP-A-0 329 332 (DOW CORNING CORPORATION)<br>* claims 1-4 * | 1,2,4,9,10 | |
| A | US-A-4 397 977 (S. R. SANDLER)<br>* column 2, last line *<br>* claim 1 * | 1,2 | |
| E | EP-A-0 545 659 (GENERAL ELECTRIC COMPANY)<br>* claims * | 10,11 | |

TECHNICAL FIELDS SEARCHED (Int. Cl.5 )

C08K
C08L

The present search report has been drawn up for all claims

| Place of search | Date of completion of the search | Examiner |
|---|---|---|
| THE HAGUE | 26 AUGUST 1993 | KANETAKIS I. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)